# EUROPÄISCHE PATENTANMELDUNG

(11) **EP 0 879 719 A2**
(43) Veröffentlichungstag der Anmeldung: **25.11.1998**
(21) Anmeldenummer: 98101855.9
(22) Anmeldetag: 04.02.1998
(51) Int. Cl.: B60J 3/02

(54) **Sonnenblende für Fahrzeuge**

(30) Priorität: 22.05.1997 DE 19721380
(71) Anmelder: BECKER GROUP EUROPE GmbH, 42285 Wuppertal (DE)
(72) Erfinder: Viertel, Lothar, 66802 Altforweiler (DE)

(57) **Zusammenfassung**

Beschrieben wird eine Sonnenblende für Fahrzeuge, umfassend einen länglichen Sonnenblendenkörper (1) mit zumindest einem darin eingelagerten Lagergehäuse (5) zur drehbaren Lagerung des Sonnenblendenkörpers (1) auf einer Achse (9), die zur Verbindung mit einem Fahrzeug vorgesehen ist, wobei das zumindest eine Lagergehäuse (5) mit einer Federvorrichtung koordiniert ist, die einer Partie der Achse (9) zur Erschaffung eines gewissen Widerstands gegen eine Drehbewegung anliegt. Erfindungsgemäß ist bei dieser Sonnenblende vorgesehen, daß das Lagergehäuse (5) eine dem Durchmesser der Achse (9) entsprechende Durchgangsbohrung (10) aufweist, daß die die Durchgangsbohrung (10) umgebende Wandung (13) einen durchlaufenden, die Wandung (13) durchsetzenden Längsschlitz (14) aufweist, daß parallel zum Längsschlitz (14) eine die Wandung (13) schwächende Scharnierausbildung (12) vorgesehen ist, daß der Wandungsbereich zwischen dem Längsschlitz (14) und der Scharnierausbildung (12) als um die Scharnierausbildung (12) schwenkbare Bremsbacke (11) ausgebildet ist und daß an der Bremsbacke (11) die an einer Stützfläche des Lagergehäuses (5) abgestützte Federvorrichtung angreift, die die in der Durchgangsbohrung (10) gelagerte Achse (9) belastet

## Beschreibung

Die Erfindung bezieht sich auf eine Sonnenblende für Fahrzeuge, umfassend einen länglichen Sonnenblendenkörper mit zumindest einem darin eingelagerten Lagergehäuse zur drehbaren Lagerung des Sonnenblendenkörpers auf einer Achse, die zur Verbindung mit einem Fahrzeug vorgesehen ist, wobei das zumindest eine Lagergehäuse mit einer Federvorrichtung koordiniert ist, die einer Partie der Achse zur Erschaffung eines gewissen Widerstands gegen eine Drehbewegung anliegt.

Heutige Sonnenblenden für Fahrzeuge haben im allgemeinen eine Vorrichtung, die mit einer Achspartie mit einer Abschrägung zusammenwirkt, damit die Federvorrichtung - außer ausreichende Friktion gegen die Achse zu schaffen, um die Sonnenblende in einer beliebigen heruntergeklappten Lage in ihrem Drehbereich zu fixieren - eine Schnapplage ergibt, in der die Sonnenblende gegen die Decke des Fahrzeugs angeklemmt wird. Bei einer üblichen Ausführung ist die Federvorrichtung aus einem U-förmig gebogenen Blech gebildet, das mit gegenüberstehenden Schenkein über die Achspartie mit der Abschrägung greift und dadurch zwei 180° von einander getrennte Schnapplagen gibt. Solche Federvorrichtungen werden im allgemeinen von einer Kunststofflagervorrichtung getragen, die, in den Fällen wo die Sonnenblende aus einem Kunststoffschaumkörper gebildet ist, Organe zur Halterung eines versteifenden Metallrahmens im Sonnenblendenkörper umfaßt. Um das Problem mit zwei Schnapplagen zu umgehen, was ja eine oftmals nicht erwünschte Schnapplage gegen die Windschutzscheibe gibt, sind mehr oder weniger komplizierte Federvorrichtungen entwickelt worden, die mit Ausgangspunkt von dem U-förmig gebogenen Federblech gegenüberstehende zusammenwirkende Federbeine haben, die seitlich im Verhältnis zueinander verschoben sind, damit das eine Federbein der Achspartie mit der Abschrägung anliegt, wahrend das andere Federbein einer an der Seite der Abschrägung belegenen, zirkularen Achspartie anliegt.

Gemeinsam für bisher bekannte Lager- und Federvorrichtungen für Sonnenblenden ist, daß sie sowohl relativ kompliziert herzustellen als auch zu montieren sind und daß Vereinfachungen in beiden Hinsichten große Einsparungen mit sich führen können, da eine Sonnenblende ein Erzeugnis ist, das in sehr großen Serien hergestellt wird.

Zweck der vorliegenden Erfindung ist generell, eine Sonnenblende der eingangs genannten Art zu schaffen, die eine Lager- und Federvorrichtung hat, die in der Gestaltung äußerst einfach ist und die bei Verwendung einer Achse ohne eine Abschrägung eine konstante Friktion erzeugt, die ausreicht, um die Sonnenblende in ihrem Drehungsbereich in jeder beliebigen Stellung zu fixieren.

Das wird mit der Erfindung dadurch erreicht, daß das Lagergehäuse eine dem Durchmesser der Achse entsprechende Durchgangsbohrung aufweist, daß die die Durchgangsbohrung umgebende Wandung einen durchlaufenden, die Wandung durchsetzenden Längsschlitz aufweist, daß parallel zum Längsschlitz eine die Wandung schwächende Scharnierausbildung vorgesehen ist, daß der Wandungsbereich zwischen dem Längsschlitz und der Scharnierausbildung als um die Scharnierausbildung schwenkbare Bremsbacke ausgebildet ist und daß an der Bremsbacke die an einer Stützfläche des Lagergehäuses abgestützte Federvorrichtung angreift, die die in der Durchgangsbohrung gelagerte Achse belastet.

Durch die Maßnahme nach Anspruch 2 wird sichergestellt, daß die Bremsbacke nicht überdrückt werden kann, wenn sich noch keine Achse in der Durchgangsbohrung befindet.

Die Maßnahme nach Anspruch 3 ermöglicht eine besonders einfache Herstellung des Lagergehäuses, wie auch eine besonders einfache Zuordnung der Federvorrichtung.

Auch die Maßnahmen der weiteren Ausgestaltungen der Erfindung, wie sie in den Ansprüchen 4 bis 6 angegeben sind, dienen der kostengünstigen Herstellung und Vereinfachung.

Ausführungsbeispiele der Erfindung werden nachfolgend anhand der Zeichnungen naher erläutert, und es zeigen:

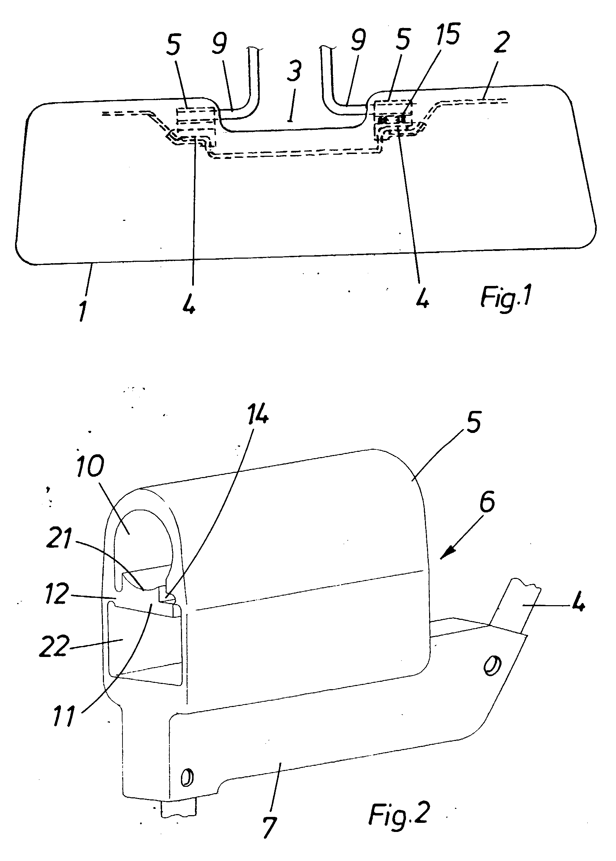

- Fig. 1: eine in Vorderansicht dargestellte Sonnenblende,
- Fig. 2: ein Lagergehäuse der Sonnenblende nach Fig. 1 in Perspektivansicht,
- Fig. 3: das mit Druckfedern bestückte Lagergehäuse nach Fig. 2 in Vorderansicht,
- Fig. 4: einen Schnitt A-A nach Fig. 3 ohne und
- Fig. 5: einen Schnitt A-A nach Fig. 3 mit in der Durchgangsbohrung angeordneter Achse,

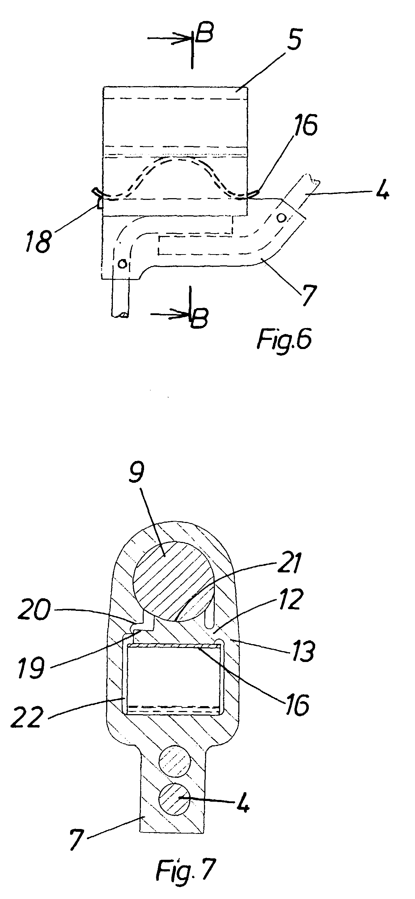

- Fig. 6: das mit einer Blattfeder bestückte Lagergehäuse der Sonnenblende nach Fig. 2 und
- Fig. 7: einen Schnitt B-B nach Fig. 6.

Die Sonnenblende wird durch einen Einlagerahmen 2 stabilisiert, wobei mittig eine U-förmige Abstufung 3 vorgesehen ist und der Einlagerahmen 2 dieser Abstufung in einem bestimmten Abstand folgt. Die Abstufung 3 ist modellbedingt. An den abgewinkelten Rahmenenden 4 des Einlagerahmens 2 sind Lagergehäuse 5 aus z.B. mineralverstärktem Kunststoff angespritzt, was zu einer unlösbaren Verbindung mit dem Einlagerahmen 2 führt. Alternativ ist es machbar, daß die Lagergehäuse 5 (hier bildlich nicht dargestellt) an den abgewinkelten Rahmenenden 4 aufgeklipst oder gesteckt sind.

Jedes Lagergehäuse 5 hat einen annähernd rechteckigen Grundkörper 6, der in einen abgestuften Materialbereich 7 übergeht, in dem die abgewinkelten Rahmenenden 4 eingebettet sind. Die Rahmenenden 4 werden durch entsprechend in der Spritzform vorgesehene Distanzbolzen positioniert und fixiert.

Das Lagergehäuse 5 hat für die Aufnahme der Achsenden 9 eine auf deren Durchmesser abgestimmte kreisförmigen Durchgangsbohrung 10, die wiederum örtlich eine Bremsbacke 11 aufweist, die durch eine integrierte Scharnieranbildung 12 mit der Wandung 13 des Lagergehäuses 5 verbunden ist und zwar über die Gesamtlänge des Lagers 5.

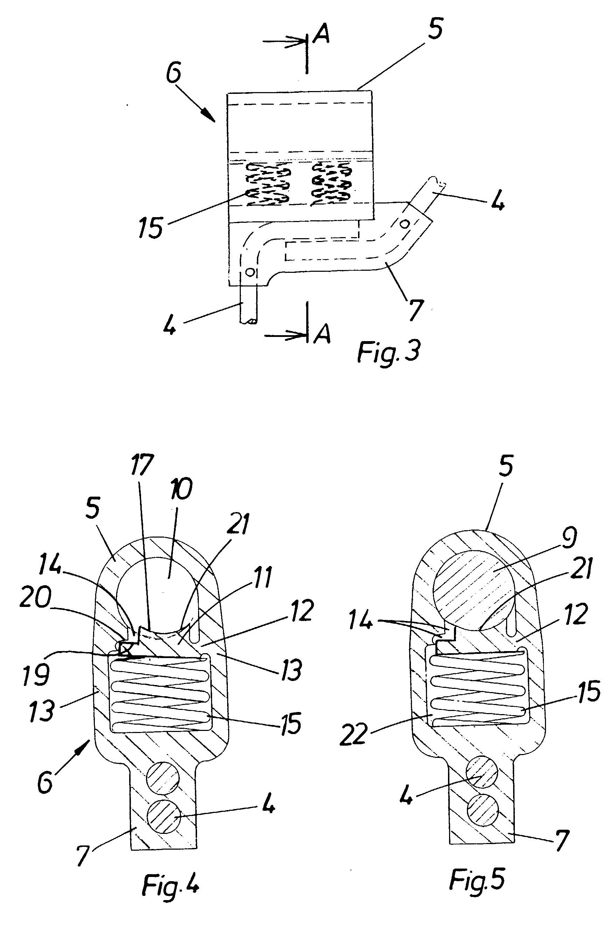

Der Scharnierausbildung 12 horizontal gegenüberliegend hat die Bremsbacke 11 keine Anbindung zur Gehäusewandung 13 des Lagergehäuses 5 sondern, aufgrund der Spritzwerkzeugauslegung, einen auf der gesamten Lagerlänge gestalteten Materialbereich bzw. Längsschlitz 14. Unterhalb der Bremsbacke 11 hat das Lagergehäuse 5 einen annähernd rechteckigen Durchgangskanal 22, der sich ebenfalls über die gesamte Lagerlänge erstreckt und zur Aufnahme von Federelementen (Druckfeder 15, Blattfeder 16) dient. Durch die Montage von Druckfedern 15 in den Durchgangskanal 22 oder aber einer Blattfeder 16 mit Anschlagszungen 18, deren Maße und Kräfte empirisch ermittelt sind, wird die Bremsbacke 11 mit ihrer Ausrundung 21, über das angebildete Scharnier 12 in die Durchgangsbohrung 10 entsprechend Fig. 4 gekippt, so daß die Bremsbacke 11 eine Verengung 17 zur ursprünglich kreisförmigen Durchgangsbohrung 10 herbeiführt.

Ein Überdrücken der Bremsbacke 11 in die Durchgangsbohrung 10 ist nicht möglich, da die Bremsbacke 11 eine Abstufung 19 aufweist, die sich wiederum an der Abstufung 20 am Lagergehäuse 5 abstützen kann. Damit ergibt sich für den Längsschlitz 14 eine labyrinthförmige Gestaltung.

Wird nun das Achsende 9 in die Durchgangsbohrung 10 - mit der vorhandenen Verengung 17 durch die Bremsbacke 11 - eingedrückt, wird durch den Druck der Achse 9 die Bremsbacke 11 zurückgedrückt, so daß sich wieder eine kreisförmige Durchgangsbohrung 10 ergibt. Da nun wiederum die Federelemente einen vorbestimmten Gegendruck erzeugen, ergibt sich aus der ermittelten Verengung 17, über die Ausrundung 21 der Bremsbacke 11 eine Kraft X auf die Achse 9, wobei die Materialwahl der Achse 9 und des Lagergehäuses 5 und der sich daraus ergebende Reibungskoeffizient genutzt wird.

Bei kleineren Sonnenblenden 1 ist es ausreichend ein Lagergehäuse 5 mit Federelementen zu bestücken, während bei größeren und gewichtigeren Sonnenblenden zwei Lagergehäuse 5 mit Federelementen bestückt werden sollten.

## Patentansprüche

1. Sonnenblende für Fahrzeuge, umfassend einen länglichen Sonnenblendenkörper (1) mit zumindest einem darin eingelagerten Lagergehäuse (5) zur drehbaren Lagerung des Sonnenblendenkörpers (1) auf einer Achse (9), die zur Verbindung mit einem Fahrzeug vorgesehen ist, wobei das zumindest eine Lagergehäuse (5) mit einer Federvorrichtung koordiniert ist, die einer Partie der Achse (9) zur Erschaffung eines gewissen Widerstands gegen eine Drehbewegung anliegt, dadurch gekennzeichnet, daß das Lagergehäuse (5) eine dem Durchmesser der Achse (9) entsprechende Durchgangsbohrung (10) aufweist, daß die die Durchgangsbohrung (10) umgebende Wandung (13) einen durchlaufenden, die Wandung (13) durchsetzenden Längsschlitz (14) aufweist, daß parallel zum Längsschlitz (14) eine die Wandung (13) schwächende Scharnierausbildung (12) vorgesehen ist, daß der Wandungsbereich zwischen dem Längsschlitz (14) und der Scharnierausbildung (12) als um die Scharnierausbildung (12) schwenkbare Bremsbacke (11) ausgebildet ist und daß an der Bremsbacke (11) die an einer Stützfläche des Lagergehäuses (5) abgestützte Federvorrichtung angreift, die die in der Durchgangsbohrung (10) gelagerte Achse (9) belastet.

2. Sonnenblende nach Anspruch 1, dadurch gekennzeichnet, daß der Längsschlitz (14) labyrinthförmig ausgebildet ist.

3. Sonnenblende nach Anspruch 1 oder 2, dadurch gekennzeichnet, daß das Lagergehäuse (5) einen sich parallel zur Durchgangsbohrung (10) erstreckenden Durchgangskanal (22) aufweist und daß die Gehausewandung (13) zwischen der Durchgangsbohrung (10) und dem Durchgangskanal (22) die Bremsbacke (11) bildet.

4. Sonnenblende nach wenigstens einem der Ansprüche 1 bis 3, dadurch gekennzeichnet, daß das Lagergehäuse (5) als Kunststoff-Spritzgußteil ausgebildet ist.

5. Sonnenblende nach Anspruch 4, dadurch gekennzeichnet, daß das Lagergehäuse (5) an einen den Sonnenblendenkörper aussteifenden Einlagerahmen (2) unmittelbar angespritzt ist.

6. Sonnenblende nach wenigstens einem der vorangegangenen Ansprüche, dadurch gekennzeichnet, daß die Federvorrichtung eine Druckfeder (15) oder eine Blattfeder (16) umfaßt.
